# EUROPEAN PATENT SPECIFICATION

(11) **EP 1 605 664 B1**
(45) Date of publication and mention of the grant of the patent: **18.07.2007**
(21) Application number: 05011701.9
(22) Date of filing: 31.05.2005
(51) Int. Cl.: H04L 29/08, H04L 12/58

(54) **Method for synchronizing status information of an IMPS client**
Verfahren zum Synchronisieren der Status Information eines IMPS Clients
Procédé pour la synchronisation d'une information de statut d'un client IMPS

(30) Priority: 08.06.2004 US 577583 P; 16.05.2005 KR 2005040905
(43) Date of publication of application: 14.12.2005
(73) Proprietor: LG ELECTRONICS INC., Seoul (KR)
(72) Inventor: Song-Rae, Cho, Gunpo, Gyunggi-Do (KR)
(74) Representative: Katérle, Axel

(56) References cited:
- WO-A-00/69140
- US-A1- 2002 129 103
- WIRELESS VILLAGE: "The Mobile IMPS Initiative, Client-Server Protocol, Sessions and Transactions, Version 1.1"[Online] 31 July 2002 (2002-07-31), pages 1-92, XP002343157 INTERNET Retrieved from the Internet: URL:http://www.openmobilealliance.org/tech /affiliates/wv/wvindex.html> [retrieved on 2005-09-01]

## Description

### BACKGROUND OF THE INVENTION

### 1. Field of the Invention

The present invention relates to an IMPS (Instant Messaging and Presence Services) and, more particularly, to a method for synchronizing status information of an IMPS client who transmits/receives data through the wireless Internet.

### 2. Description of the Related Art

The IMPS is the latest technique for a new communication device based on the Internet, which is used for exchanging status information (namely, presence information) among a mobile device, a mobile communication service system and an Internet-based instant messaging service system. Namely, a remarkable feature of the IMPS is that it provides the status service and the instant messaging service.

The status service provides a state of an IMPS client, a state of a user, management of a list of users registered for a service, and the instant messaging service allows an instant message including text, video, pictures or sound to be transmitted to or received from a user of a specific client or a user of a different instant messaging system.

The IMPS system includes a client mounted in a specific device and implementing the IMPS and a server for connecting a session to clients and transmitting status information and an instant message to a corresponding client.

Status information of contacts registered in the client and status information stored in the server can be synchronized by using the two following methods.

One method is a status information notification method, in which when status information of a contact registered in one client changes, the server provides status information including the corresponding status information to other clients.

When status information of a contact registered in the server is updated, the server transmits a status information notification request message (PresenceNotificationRequest) including the updated status information to a client and the client responds as a status message.

In the status information notification method, whenever status information of a contact registered in the client changes, the server automatically provides the status information to the client. That is, even in case that a user of the corresponding client does not check the status information of the contact, the server continuously transmits the status information data to the client. Namely, although the user of the client does not need the status information of the contact, the status information is transmitted.

The second method is a status information acquiring method in which a client fetches status information of contacts registered for the client itself from the server.

When the client transmits a status information acquiring request message (GetPresenceRequest) including a user ID or a contact list name to the server, the server transmits a status information acquiring response message (GetPresenceResponse) including a result with respect to the request and a status attribute to the corresponding client.

The status information acquiring method has a problem that since even status information of contacts whose status has not been changed is requested and status information of every contact is transmitted through a wireless channel according to a corresponding request, traffic increases and a channel is wasted.

US 2002/0129103 A1 discloses a method for updating presence information between a client and a server.

### SUMMARY OF THE INVENTION

Therefore, an object of the present invention is to provide a method for synchronizing status information of an IMPS client capable of transmitting and synchronizing only the smallest amount of status information as required between the server and the client in a wireless environment where a data transmission speed is low or a bandwidth is small.

To achieve at least the above objects in whole or in parts, there is provided a method for synchronizing status information of an IMPS client including: checking by a server whether version information (Presence-Data-Version-Number) is included in a status information request message (GetPresenceRequest) received from a specific client; and comparing status information corresponding to the version information and current status information and transmitting changed status information of a contact as a status information response message to the client, in case that the version information is included in the received status information request message.

To achieve at least these advantages in whole or in parts, there is further provided a method for synchronizing status information of an IMPS client including: transmitting a status information request message by a specific client; checking version information from the status information request message by a server upon receiving the status information request message; comparing status information stored in association with a first value with current status information by the server if the version information is the first value; transmitting status information response message including different status information and version information having a second value by the server to the client; and updating status information of contacts by the client upon receiving the status information response message, and storing the second value as version information.

Additional advantages, objects, and features of the invention will be set forth in part in the description which follows and in part will become apparent to those having ordinary skill in the art upon examination of the following. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 is a flow chart of a method for synchronizing status information in accordance with the present invention; and
Figures 2A and 2B are tables showing formats of status information request messages and status information response messages in accordance with the present invention.

### DETAILED DESCRIPTION OF THE PREFERRED EMBODIMENTS

A method for synchronizing status information of an IMPS client in accordance with the present invention will now be described with reference to the accompanying drawings.

A mobile terminal which uses the wireless Internet is disadvantaged in terms of a data transmission rate compared to transmission of data by using a cable Internet. Thus, a client of an IMPS (Instance Messaging and Presence Services) mounted in the mobile terminal must synchronize status information of a contact by receiving the smallest amount of data from a server.

Thus, in the present invention, the server transmits only changed status information to the client which requests status information. In this case, the server manages version information with respect to status information of contacts registered by the client, and when the server receives a status information request from the client, it compares status information stored in association with version information received from the client with current status information to obtain changed status information and transmits it to the corresponding client. And then, the server stores the current status information by associating it with one-step higher version information than the previous version information.

The present invention employs the status information acquiring method in which the client requests status information of contacts registered in the client itself from the server and the server transmits status information to the corresponding client upon receiving the request. In this case, the client and the server manage the status information in association with the version information.

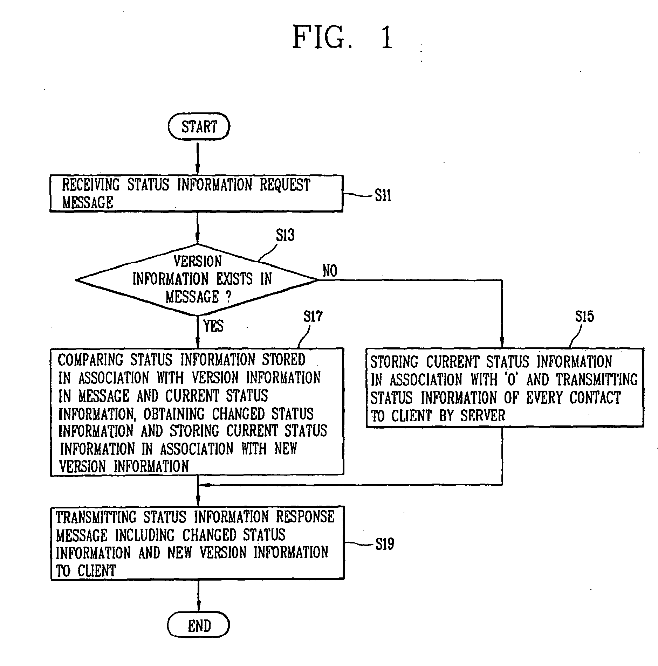

Figure 1 is a flow chart of a method for synchronizing status information in accordance with the present invention.

When the client transmits a status information request message to the server in order to synchronize status information of contacts registered for the client itself with the latest information of the server, the server receives the message (step S11) and checks whether there is version information in the status information request message (step S13). In this respect, if the status information request message is first transmitted, the client does not include version information therein, whereas if the status information request message is not a first transmitted one, the client includes version information which has been received most recently from the server and then transmits it.

If version information is not included in the status information request message, the server determines that the status information request message has been first transmitted from the client, stores status information of current contacts in association with version information '0', and transmits status information of every contact as a status information response message to the corresponding client (step S15).

If version information is included in the status information request message, the server compares the status information stored in association with the version information with the current status information to obtain changed status information of contacts and stores status information of current contacts in association with new version information (step S17). In this case, the new version information is 'previous version information + 1'.

The server transmits status information response message including the changed status information and the new version information to the client (step S19).

At least, the server must have current status information of contacts, new version information, previous status information of contacts before being updated, and its version information, namely, the latest two version information items and respective status information.

If the status information response message is lost during its transmission, the server receives again the status information request message including previous version information from the client, and compares the status information in association with the previous version information with current status information to obtain changed status information with respect to contacts.

Namely, when the status information response message is lost during its transmission, the server receives again the status information request message using the previous version information from the client, and in this case, the server stores the latest two version information items and respective status information in order to accurately cope with the situation.

Upon receiving the status information response message, the client updates the status information included in the message to synchronize it with the latest status information and stores the new version information included in the message. The new version information is added in a corresponding message when the client transmits a next status information request message.

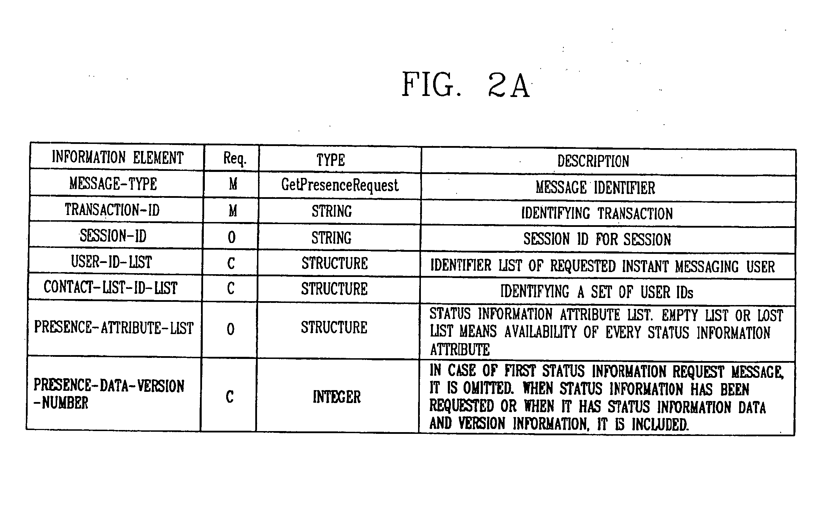

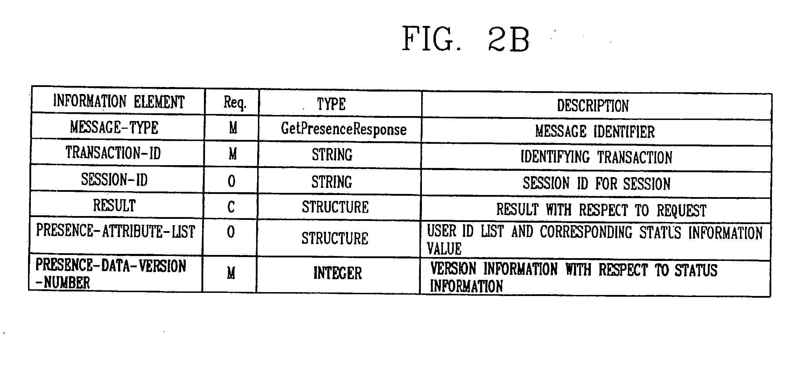

Figures 2A and 2B are tables showing formats of status information request messages and status information response messages in accordance with the present invention.

As shown in Figure 2A, the status information request message mandatorily includes a message type field and a transaction ID field, optionally includes a session ID field and a status information attribute list field (Presence-Attribute-List), and conditionally includes a user ID list field, a status information attribute list (Presence-Attribute-List) and a version information field (Presence-Data-Version-Number).

Herein, the version information field is a newly added field in the present invention, which is not included in a first transmitted status information request message, and when the client has version information, the corresponding version information is included.

With reference to Figure 2B, the status information response message mandatorily includes the message type, the transaction ID and the version information field, optionally includes the session ID and the status information value list field (Presence-Value-List), and conditionally includes a result field with respect to a request. The version information field is a newly added field in the present invention, including new version information obtained by upgrading one step the version information included in the status information request message.

When the server receives status information request message without the version information, the server resets current status information as '0', adds the value in the version information field of the status information response message, and transmits it.

The format of the version information field included in the status information request message and the status information response message can be defined in a character string type as well as in an integer type.

As so far described, the method for synchronizing status information of the IMPS client in accordance with the present invention has the following advantages.

That is, because the server transmits only changed status information to the client to synchronize the status information, traffic of radio channels can be reduced and wasted channels can be reduced, and thus, channel efficiency can be enhanced.

## Claims

1. A method for synchronizing status information of an IMPS client comprising:
checking (S13) by a server whether version information (Presence-Data-Version-Number) is included in a status information request message (GetPresenceRequest) received (S11) from a specific client; and
comparing (S17) status information corresponding to the version information and current status information and transmitting (S19) changed status information of a contact as a status information response message to the client, in case that the version information is included in the received status information request message.

2. The method of claim 1, wherein the step of transmitting (S19) the changed status information response message comprises:
obtaining (S17) the changed status information of the contact;
storing (S17) the current status information in association with new version information; and
transmitting (S19) the changed status information and the new version information to the client.

3. The method of claim 2, wherein the new version information is one-step higher than the version information.

4. The method of claim 2, further comprising:
storing status information in association with the version information included in the status information request message. (see page 7, lines 8 to 11)

5. The method of claim 1, further comprising:
storing the current status information of contacts in association with a version information initial value, if the version information is not included; and
transmitting a status information response message including status information of every contact and the version information initial value to the client.

6. A method for synchronizing status information of an IMPS client comprising:
transmitting a status information request message by a specific client;
checking (S13) version information from the status information request message by a server upon receiving (S11) the status information request message;
comparing (S17) status information stored in association with a first value with current status information by the server if the version information is the first value; transmitting (S19) status information response message including different status information and version information having a second value by the server to the client; and
updating status information of contacts by the client upon receiving the status information response message, and storing the second value as version information.

7. The method of claim 6, wherein, in the step of transmitting (S11) the status information request message, the first status information request message is transmitted without having version information.

8. The method of claim 6, wherein, in the step of transmitting (S19) the status information request message, if the corresponding message is the first one, the client does not add the version information therein, whereas if the corresponding message is not the first one, the client adds the version information stored in the client itself to the message.

9. The method of claim 6, wherein the server stores (S17) at least a first value, a second value in association with the first value, and status information in association with the second value.

10. The method of claim 6, further comprising:
transmitting (S19) by the server a status information response message including status information of every contact and version information having the second value to the client, if no version information is included in the status information request message transmitted by said client.

## Patentansprüche

1. Verfahren zur Synchronisierung von Statusinformationen eines IMPS-Client, umfassend:
Prüfen (S13) seitens eines Servers, ob in einer von einem bestimmten Client erhaltenen (S11) Statusinformationsanforderungsnachricht (GetPresenceRequest) Versionsinformationen (Presence-Data-Version-Number) enthalten sind, und
Vergleichen (S17) von Statusinformationen, die den Versionsinformationen entsprechen, und aktuellen Statusinformationen sowie Übermitteln (S19) von Statusänderungsinformationen eines Kontakts als Statusinformationsantwortnachricht an den Client, falls die Versionsinformationen in der empfangenen Statusinformationsanforderungsnachricht enthalten sind.

2. Verfahren nach Anspruch 1, wobei der Schritt des Übermittelns (S19) der Statusänderungsinformationsantwortnachricht umfasst:
Erhalten (S17) der Statusänderungsinformationen des Kontakts,
Speichern (S17) der aktuellen Statusinformationen in Zuordnung zu neuen Versionsinformationen und
Übermitteln der Statusänderungsinformationen und der neuen Versionsinformationen an den Client.

3. Verfahren nach Anspruch 2, wobei die neuen Versionsinformationen um einen Schritt gegenüber den Versionsinformationen erhöht sind.

4. Verfahren nach Anspruch 2, ferner umfassend:
Speichern von Statusinformationen in Zuordnung zu den in der Statusinformationsanforderungsnachricht enthaltenen Versionsinformationen (siehe Seite 7, Zeilen 8-11).

5. Verfahren nach Anspruch 1, ferner umfassend:
Speichern der aktuellen Statusinformationen von Kontakten in Zuordnung zu einem Versionsinformationsanfangswert, falls keine Versionsinformationen enthalten sind, und
Übermitteln einer Statusinformationsantwortnachricht mit Statusinformationen jedes Kontakts und dem Versionsinformationsanfangswert an den Client.

6. Verfahren zur Synchronisierung von Statusinformationen eines IMPS-Client, umfassend:
Übermitteln einer Statusinformationsanforderungsnachricht seitens eines bestimmten Client,
Prüfen (S13) von Versionsinformationen aus der Statusinformationsanforderungsnachricht seitens eines Servers nach Erhalt (S11) der Statusinformationsanforderungsnachricht,
Vergleichen (S17) von in Zuordnung zu einem ersten Wert gespeicherten Statusinformationen mit aktuellen Statusinformationen durch den Server, falls die Versionsinformationen der erste Wert sind,
Übermitteln (S19) einer Statusinformationsantwortnachricht mit anderen Statusinformationen und Versionsinformationen eines zweiten Werts durch den Server an den Client und
Aktualisieren von Statusinformationen von Kontakten durch den Client nach Erhalt der Statusinformationsantwortnachricht und Speichern des zweiten Werts als Versionsinformation.

7. Verfahren nach Anspruch 6, wobei bei dem Schritt des Übermittelns (S11) der Statusinformationsanforderungsnachricht die erste Statusinformationsanforderungsnachricht ohne Versionsinformationen übermittelt wird.

8. Verfahren nach Anspruch 6, wobei bei dem Schritt des Übermittelns (S19) der Statusinformationsanforderungsnachricht der Client, sofern die entsprechende Nachricht die erste ist, keine Versionsinformationen dazufügt, wogegen der Client, sofern die entsprechende Nachricht nicht die erste ist, die in dem Client selbst gespeicherten Versionsinformationen zu der Nachricht hinzufügt.

9. Verfahren nach Anspruch 6, wobei der Server zumindest einen ersten Wert, einen zweiten Wert in Zuordnung zu dem ersten Wert sowie Statusinformationen in Zuordnung zu dem zweiten Wert speichert (S17).

10. Verfahren nach Anspruch 6, ferner umfassend:
Übermitteln (S19) einer Statusinformationsantwortnachricht mit Statusinformationen jedes Kontakts und Versionsinformationen des zweiten Werts von dem Server an dem Client, sofern keine Versionsinformationen in der von dem Client übermittelten Statusinformationsanforderungsnachricht enthalten sind.

## Revendications

1. Procédé pour synchroniser une information d'état d'un client IMPS comprenant :
de contrôler (S13) par un serveur si une information de version (Presence-Data-Version-Number) est incluse dans un message de demande d'information d'état (GetPresenceRequest) reçu (S11) d'un client spécifique ; et
de comparer (S17) l'information d'état correspondant à l'information de version et à l'information d'état actuelle et de transmettre (S19) l'information d'état modifiée d'un contact comme un message de réponse d'information d'état au client, dans le cas où l'information de version est incluse dans le message de demande d'information d'état reçu.

2. Procédé selon la revendication 1, dans lequel l'étape de transmettre (S19) le message de réponse d'information d'état modifiée comprend:
d'obtenir (S17) l'information d'état modifiée du contact ;
de stocker (S17) l'information d'état actuelle en association avec la nouvelle information de version ; et
de transmettre (S19) l'information d'état modifiée et la nouvelle information de version au client.

3. Procédé selon la revendication 2, dans lequel la nouvelle information de version est un échelon plus élevée que l'information de version.

4. Procédé selon la revendication 2, comprenant en outre :
de stocker l'information d'état en association avec l'information de version incluse dans le message de demande d'information d'état. (voir page 7, lignes 8 à 11)

5. Procédé selon la revendication 1, comprenant en outre :
de stocker l'information d'état actuelle de contacts en association avec une valeur initiale d'information de version, si l'information de version n'est pas incluse ; et
de transmettre un message de réponse d'information d'état incluant l'information d'état de chaque contact et la valeur initiale d'information de version au client.

6. Procédé pour synchroniser une information d'état d'un client IMPS comprenant :
de transmettre un message de demande d'information d'état par un client spécifique ;
de contrôler (S13) l'information de version à partir du message de demande d'information d'état par un serveur à réception (S11) du message de demande d'information d'état ;
de comparer (S17) l'information d'état stockée en association avec une première valeur avec l'information d'état actuelle par le serveur si l'information de version est la première valeur ;
de transmettre (S19) le message de réponse d'information d'état incluant une information d'état différente et une information de version ayant une deuxième valeur par le serveur au client ; et
de mettre à jour l'information d'état de contacts par le client à réception du message de réponse d'information d'état, et de stocker la deuxième valeur comme information de version.

7. Procédé selon la revendication 6, dans lequel, dans l'étape de transmettre (S11) le message de demande d'information d'état, le premier message de demande d'information d'état est transmis sans avoir d'information de version.

8. Procédé selon la revendication 6, dans lequel, dans l'étape de transmettre (S19) le message de demande d'information d'état, si le message correspondant est le premier, le client n'ajoute pas l'information de version dans celui-ci, tandis que si le message correspondant n'est pas le premier, le client ajoute l'information de version stockée dans le client lui-même au message.

9. Procédé selon la revendication 6, dans lequel le serveur stocke (S17) au moins une première valeur, une deuxième valeur en association avec la première valeur et l'information d'état en association avec la deuxième valeur.

10. Procédé selon la revendication 6, comprenant en outre :
de transmettre (S19) par le serveur un message de réponse d'information d'état incluant l'information d'état de chaque contact et l'information de version ayant la deuxième valeur au client, si aucune information de version n'est incluse dans le message de demande d'information d'état transmis par ledit client.
